# EUROPÄISCHE PATENTSCHRIFT

(11) **EP 3 623 685 B1**
(45) Veröffentlichungstag und Bekanntmachung des Hinweises auf die Patenterteilung: **29.06.2022**
(21) Anmeldenummer: 19405015.9
(22) Anmeldetag: 12.09.2019
(51) Int. Cl.: F16N 31/00, B65D 88/52, B65D 90/24

(54) **ZUSAMMENLEGBARER BEHÄLTER**
COLLAPSIBLE CONTAINER
RÉCIPIENT PLIABLE

(30) Priorität: 17.09.2018 CH 11002018
(43) Veröffentlichungstag der Anmeldung: 18.03.2020
(73) Patentinhaber: Acquaalta Schutzsysteme GmbH, 9555 Müllheim (CH)
(72) Erfinder: Sager, Bruno, 8555 Müllheim (CH)
(74) Vertreter: Wagner, Wolfgang Heribert

(56) Entgegenhaltungen:
- DE-U1- 8 904 720
- DE-U1- 9 201 155
- GB-A- 1 479 215
- US-A- 5 090 588
- US-A- 5 316 175
- US-A- 5 429 437
- US-A- 5 762 233
- US-A1- 2009 041 543
- US-A1- 2018 194 550

## Beschreibung

### Technisches Gebiet

Die Erfindung betrifft einen zusammenlegbaren, flüssigkeitsdichten offenen Behälter, welcher je nach Grösse zur Speicherung von Wasser bei Löscharbeiten oder auch zum Auffangen von Öl usw. bei Undichtigkeiten an Leitungen und Gefässen oder bei Wartungs- und Reparaturarbeiten eingesetzt werden kann.

### Stand der Technik

Ein gattungsgemässer zusammenlegbarer Behälter ist aus EP 1 616 816 A2 bekannt. Bei diesem in der Regel eher kleinen, als Auffangwanne für Öl und dergleichen geeigneten rechteckigen Behälter sind die Seitenwände aus flexibel verbundenen starren Wandteilen zusammengesetzt, während der Boden lediglich aus einer flexiblen Plane besteht. Dadurch kann die Grundfläche des Behälters sehr flexibel an die Einsatzbedingungen angepasst werden und der Behälter kann auch durch Zusammenfalten der Seitenwand und Aufeinanderlegen benachbarter Wandteile sehr klein zusammengelegt werden. Der Boden wird dabei allerdings, falls nicht besondere Vorkehrungen getroffen werden, gewöhnlich nicht in bestimmter, eindeutig vorgegebener Weise gefaltet, sondern eher zufällig zusammengeknüllt, was die Handhabung des zusammengelegten Behälters erschwert.

### Darstellung der Erfindung

Der Erfindung liegt die Aufgabe zugrunde, einen gattungsgemässen Behälter anzugeben, welcher in einfacher Weise in einer bestimmten Form zusammengelegt werden kann.

### Kurze Beschreibung der Zeichnungen

Im folgenden wird die Erfindung anhand von Figuren, welche lediglich ein Ausführungsbeispiel darstellen, näher erläutert. Es zeigen
- Fig. 1: eine schematische Darstellung eines erfindungsgemässen Behälters in einem Einsatzzustand in perspektivischer Darstellung,
- Fig. 2: eine Draufsicht auf den Behälter nach Fig. 1,
- Fig. 3: einen Schnitt durch den erfindungsgemässen Behälter längs III-III in Fig. 2,
- Fig. 4: schematisch eine erweiterte Form des Behälters gemäss Fig. 1-3 im Einsatzzustand in perspektivischer Darstellung,
- Fig. 5: eine praktische Ausführungsform des Behälters gemäss Fig. 1-3 im Einsatzzustand in Draufsicht,
- Fig. 6: den Behälter von Fig. 5 in einem weiteren Einsatzzustand in Draufsicht,
- Fig. 7: schematisch einen Schnitt durch den Behälter von Fig. 6 und
- Fig. 8-11: mehrere Schritte des Zusammenlegens des Behälters gemäss Fig. 5, d.h. seine Überführung vom Einsatzzustand in einen Lagerzustand.

### Wege zur Ausführung der Erfindung

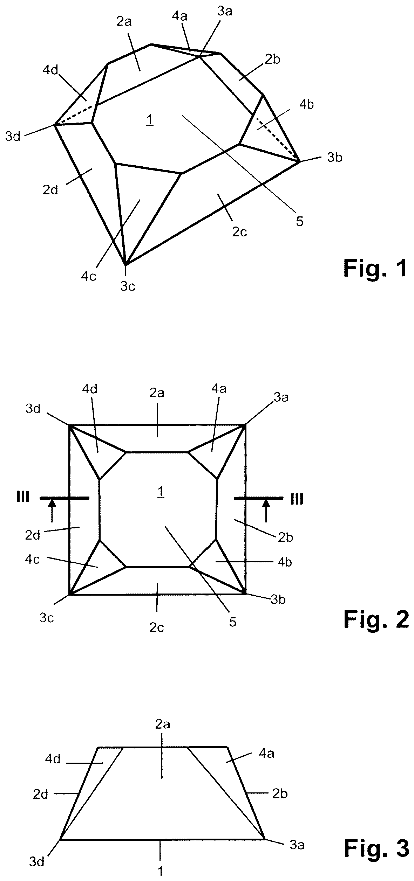

Der in Fig. 1-3 schematisch dargestellte in einem Einsatzzustand befindliche Behälter umfasst einen quadratischen Boden 1, an dessen Seiten gleiche trapezförmige Seitenwände 2a,b,c,d anschliessen, deren unterer Rand sich jeweils über die Länge der Seite erstreckt und flexibel mit dem Boden 1 verbunden ist, sodass die Neigung der Seitenwand 2a;b;c;d gegenüber dem Boden 1 verstellbar ist. Jede der Seitenwände 2a,b,c,d weist somit gegeneinander geneigte Seitenränder auf, welche jeweils von einer der Bodenecken 3a,b,c,d ausgehen und in einem freien oberen Rand enden. Die Seitenränder zweier benachbarter Seitenwände 2a,b, 2b,c, 2c,d, 2d,a, die jeweils an einer Bodenecke 3a;b;c;d zusammenstossen, sind jeweils durch einen sich von der entsprechenden Bodenecke 3a;b;c;d nach oben verbreiternden Zwickel 4a;b;c;d verbunden, welcher flexibel an die beiden Seitenränder anschliesst und selbst mindestens längs einer Mittellinie faltbar ist. Die Seitenwände 2a,b,c,d sind etwas nach innen geneigt, vorzugsweise schliessen sie mit dem Boden einen Winkel von zwischen 50° und 85° ein. Die freien oberen Ränder der Seitenwände 2a,b,c,d und die sie verbindenden freien oberen Ränder der Zwickel 4a,b,c,d umgeben eine oberhalb des Bodens 1 liegende achteckige Öffnung 5, durch die Flüssigkeit in den Behälter geleitet oder aus ihm entnommen werden kann.

Der Behälter kann aus dem Einsatzzustand, in dem er vollständig aufgefaltet ist und der Winkel zwischen dem Boden 1 und den Seitenwänden 2a,b,c,d maximal ist, zu einem definierten flachen Lagerzustand, in dem er sehr wenig Volumen benötigt und leicht gelagert und transportiert werden kann, zusammengelegt werden, indem zuerst die Seitenwände 2a,b,c,d gegen den Boden 1 gekippt werden, derart, dass sie auf demselben aufliegen, während die Zwickel 4a,b,c,d jeweils längs der Mittellinie gefaltet und auf oder unter eine der Seitenwände 2a,b,c,d umgelegt werden.

Der Behälter umfasst vorzugsweise eine einstückige Plane aus flexiblem festen Material, welche mindestens die Oberseite des Bodens 1 und mindestens die Innenflächen der Seitenwände 2a,b,c,d sowie die Zwickel 4a,b,c,d bildet. Je nach Grösse und Einsatzbereich können der Boden 1, die Seitenwände 2a,b,c,d und die Zwickel 4a,b,c,d ausschliesslich aus der besagten Plane bestehen. Dies wird vor allem für grosse Behälter für z.B. 1000 l bis 80'000 l Flüssigkeit bevorzugt, welche z.B. als Löschwasserbecken eingesetzt werden können. Bei solchen Behältern ist es oft günstig, wenn an den oberen Rändern der Seitenwände 2a,b,c,d und u.U. auch der Zwickel 4a,b,c,d Schlaufen vorgesehen sind, die zur Stabilisierung feste Randstangen, z.B. aus glasfaserverstärktem Kunststoff, aufnehmen, welche an den Enden gelenkig oder auch starr verbunden sein können. Statt der Randstangen oder zusätzlich können dort auch Schwimmkörper vorgesehen sein. Auch grosse erfindungsgemässe Behälter sind trotz der grossen auftretenden Kräfte sehr stabil, was durch die erwähnten Ergänzungen noch gesteigert werden kann. Günstig für die Stabilität ist es auch, wenn der Boden 1 wie dargestellt quadratisch ist und die oberen Ränder der Seitenwände 2a,b,c,d und der Zwickel 4a,b,c,d jeweils etwa gleich lang sind, derart, dass die Öffnung 5 mindestens annähernd ein regelmässiges Achteck bildet.

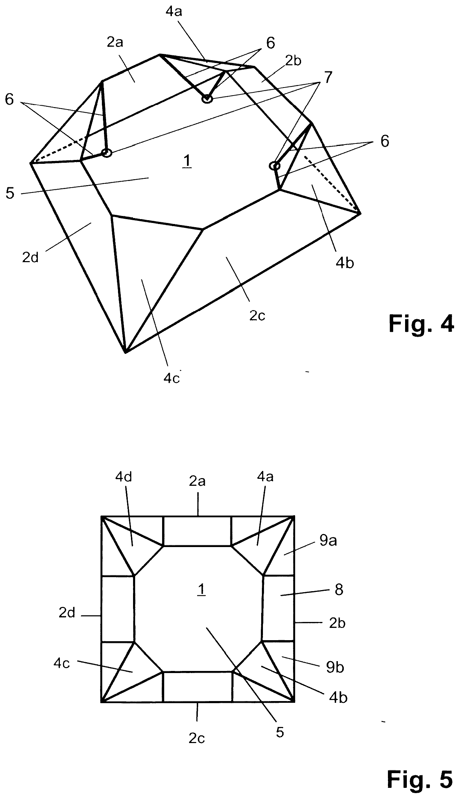

Wie in Fig. 4 dargestellt, können vor allem bei grossen Behältern die Enden der oberen Ränder der Seitenwände 2a,b,c,d zur weiteren Stabilisierung durch Stützen 6, die als Stützstangen aus glasfaserverstärktem Kunststoff ausgebildet sein können, am Boden 1 abgestützt sein. Vorzugsweise stossen die unteren Enden der beidseits eines der Zwickel 4a,b,c,d angeordneten Stützen 6 jeweils knapp nebeneinander auf den Boden 1, der dort Verstärkungsringe 7 oder andere Verstärkungseinsätze aufweist, die auch ein Verrutschen der Stützen 6 verhindern. Die oberen Enden der Stützen 6 können mit den bereits erwähnten Randstangen oder auch direkt mit der Plane verbunden sein. Zusätzlich können im Bereich der oberen Ränder der Seitenwände 2a,b,c,d auch Ösen vorgesehen sein, an denen z.B. im Erdreich verankerte oder anderweitig festgelegte Haltetaue befestigt werden können.

Vor allem bei kleineren Behältern für bis zu etwa 100 l Flüssigkeit, die z.B. als Auffangbehälter für Öl und dergleichen eingesetzt werden, können die Seitenwände 2a,b,c,d jeweils in Seitenwandabschnitte unterteilt sein, welche durchwegs oder zum Teil starr, aber dabei flexibel verbunden sind, sodass sie gegeneinander verdreht werden können. So weisen die Seitenwände 2a,b,c,d des in Fig. 5 dargestellten Behälters jeweils einen starren rechteckigen Mittelabschnitt 8 auf, welcher sich vom an den Boden anschliessenden unteren Rand bis zum oberen Rand erstreckt und an welchem die Plane an der Aussenseite durch eine starre Platte oder einen starren Rahmen ergänzt ist sowie beidseits desselben dreieckige Seitenabschnitte 9a,b, welche sich jeweils vom unteren Rand bis zum Rand des benachbarten Zwickels erstrecken und gleich lang sind wie der Mittelabschnitt 8 und die, da sie lediglich aus einem Abschnitt der Plane bestehen, flexibel sind. Auch die Zwickel 4a,b,c,d und der Boden 1 bestehen jeweils nur aus einem dreieckigen bzw. quadratischen Abschnitt der Plane und sind daher flexibel. Doch können die Seitenabschnitte 9a,b auch starr und lediglich flexibel mit dem Mittelabschnitt 8 verbunden sein. Ein flexibler Boden 1 ist insofern vorteilhaft, als er erlaubt, die Grundfläche des Behälters an den zur Verfügung stehenden Raum anzupassen und z.B. einen Einsprung zu bilden, wenn ein Hindernis wie z.B. ein Rad eines Fahrzeugs dies erfordert, doch kann der Boden 1 auch aus z.B. neun gleichen starren Teilen bestehen, die längs Geraden, die die Grenzen zwischen den Mittelabschnitten 8 und den Seitenabschnitten 9a,b fortsetzen, flexibel verbunden sind. Vor allem bei grösseren, insbesondere längeren rechteckigen Behältern können die Seitenwände durchwegs oder auch nur an den Längsseiten mehr als dreifach unterteilt sein, sodass der Behälter kleiner zusammengelegt werden kann. Falls er aus starren Teilen besteht, muss dann auch der Boden entsprechend unterteilt sein.

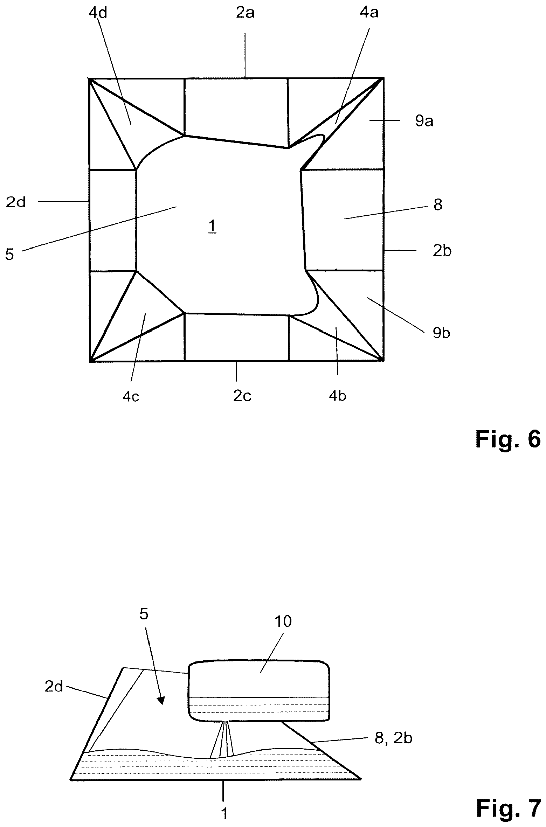

Auf den Mittelabschnitt 8 der Seitenwände 2a,b,c,d wirkt jeweils ein am Boden 1 abgestütztes Federelement (nicht dargestellt), vorzugsweise eine Doppeltorsionsfeder, ein. Es beaufschlagt den Mittelabschnitt 8 mit einer elastischen Kraft, die geeignet ist, den Winkel zwischen demselben und dem Boden 1 zu vergrössern, also den Mitteilteil 8 und damit die ganze Seitenwand 2a;b;c;d aufzurichten. Dies hat den Vorteil, dass sich die Höhe des Behälters von selbst an die zur Verfügung stehende lichte Höhe anpasst, wie dies etwa in Fig. 6 und 7 gezeigt ist, wo der Behälter unter ein leckes Gefäss 10 (nur in Fig. 7 dargestellt) geschoben ist, dessen Abstand vom Boden geringer ist als die Höhe des voll aufgefalteten Behälters. Der obere Rand der rechten Seitenwand 2b ist daher etwas nach unten gedrückt und der Winkel zwischen derselben und dem Boden 1 kleiner als im voll aufgefalteten Einsatzzustand.

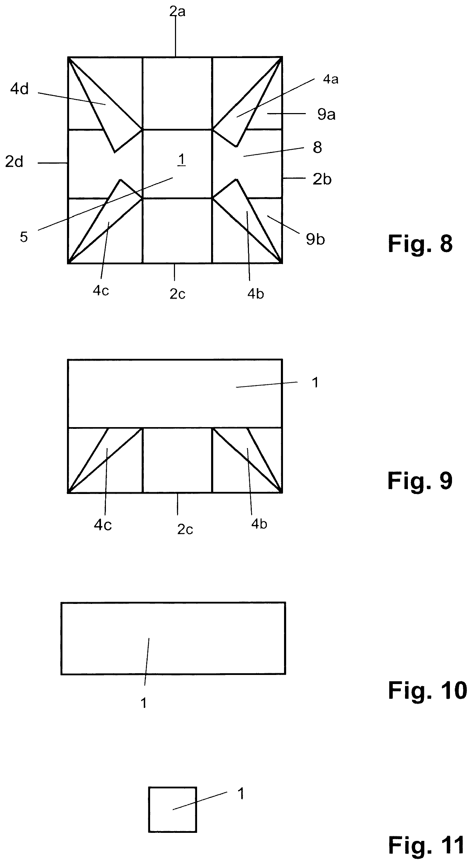

Fig. 8-11 zeigen das weitere Zusammenlegen des Behälters von Fig. 5, der in Fig. 8 bereits so weit zusammengelegt ist wie oben im Zusammenhang mit den Figuren 1 bis 3 beschrieben. Wenn der Boden 1, die Seitenwände 2a,b,c,d und die Zwickel 4a,b,c,d flexibel sind oder in geeigneter Weise aus flexibel verbundenen Abschnitten zusammengesetzt sind, so kann das Zusammenlegen weitergeführt werden. Dazu werden die äusseren Drittel nacheinander über das mittlere Drittel gefaltet (Fig. 9, 10). Von dieser Konfiguration werden nun wiederum die äusseren Drittel über das mittlere Drittel gefaltet, sodass der Behälter schliesslich sehr flach ist und nur eine quadratische Fläche einnimmt, deren Seitenlänge einem Drittel der Seitenlänge seiner Grundfläche, d.h. des Bodens 1 entspricht. Bei mehr als dreifach unterteilten Seitenwänden erfolgt das Zusammenlegen in ähnlicher Weise, z.B. indem die Seitenwandabschnitte jeweils in Zickzack-Form aufeinandergefaltet werden. Der Behälter kann dann im Lagerzustand, d.h. wenn er vollständig zusammengelegt ist, durch einen Gurt mit einer Schnalle oder andere Mittel oder durch Einschieben in einen ihn knapp umgebenden Sack fixiert werden.

Abweichend vom beschriebenen Ausführungsbeispiel kann der Boden wie schon erwähnt auch länglich rechteckig sein oder auch sechseckig oder er kann die Form eines anderen regelmässigen oder unregelmässigen Vielecks haben, wenn auch eine rechteckige und insbesondere eine quadratische Form wegen der guten Stabilität und Einfachheit der Handhabung bevorzugt wird. Die Seitenwände können durchwegs oder zum Teil - z.B. jede zweite Seitenwand - rechteckig und senkrecht sein, wenn auch wegen der grösseren Stabilität nach innen geneigte Seitenwände, bei denen der obere Rand kürzer ist als der untere Rand, bevorzugt werden. Auch eine Neigung der Seitenwände nach aussen ist möglich. Boden und Seitenwände können wie erwähnt vollständig flexibel sein oder gemäss verschiedenen Aufteilungen, welche jeweils eine bestimmte Art des Zusammenlegens und des Lagerzustands vorgeben, aus flexibel verbundenen starren Teilen bestehen.

### Bezugszeichenliste

- 1: Boden
- 2a,b,c,d: Seitenwände
- 3a,b,c,d: Bodenecken
- 4a,b,c,d: Zwickel
- 5: Öffnung
- 6: Stütze
- 7: Verstärkungsring
- 8: Mittelabschnitt
- 9a,b: Seitenabschnitte
- 10: Gefäss

## Patentansprüche

1. Zusammenlegbarer Behälter mit einem Boden (1) von der Form eines Vielecks sowie mit an jeder Seite des Bodens (1) einer sich über deren Länge erstreckenden, mit einem unteren Rand flexibel an sie anschliessenden trapezförmigen Seitenwand (2a, 2b, 2c, 2d) mit Seitenrändern, welche jeweils von einer Bodenecke (3a, 3b, 3c, 3d) ausgehen und einem freien oberen Rand, **dadurch gekennzeichnet, dass** an die an einer Bodenecke (3a; 3b; 3c; 3d) zusammenstossenden Seitenränder zweier benachbarter Seitenwände (2a, 2b; 2b, 2c; 2c, 2d; 2d, 2a) jeweils durch einen sich von der Bodenecke (3a; 3b; 3c; 3d) bis zu einem oberen Rand verbreiternden dreieckigen Zwickel (4a; 4b; 4c; 4d) verbunden sind, welcher jeweils flexibel an die beiden Seitenränder anschliesst, derart, dass in einem Einsatzzustand des Behälters die oberen Ränder der Seitenwände (2a, 2b, 2c, 2d) und der Zwickel (4a, 4b, 4c, 4d) eine oberhalb des Bodens (1) liegende Öffnung (5) umgeben.

2. Behälter nach Anspruch 1, **dadurch gekennzeichnet, dass** jeder der Zwickel (4a, 4b, 4c, 4d) jeweils mindestens längs einer Mittellinie faltbar ist.

3. Behälter nach Anspruch 1 oder 2, **dadurch gekennzeichnet, dass** mindestens bei jeder zweiten der Seitenwände (2a, 2b, 2c, 2d) der obere Rand kürzer ist als der untere Rand und im Einsatzzustand jede der Seitenwände (2a, 2b, 2c, 2d) bezüglich des Bodens (1) senkrecht oder nach innen geneigt ist.

4. Behälter nach Anspruch 3, **dadurch gekennzeichnet, dass** bei jeder der Seitenwände (2a, 2b, 2c, 2d) der obere Rand kürzer ist als der untere Rand und im Einsatzzustand jede der Seitenwände (2a, 2b, 2c, 2d) bezüglich des Bodens (1) nach innen geneigt ist.

5. Behälter nach Anspruch 4, **dadurch gekennzeichnet, dass** im Einsatzzustand jede der Seitenwände (2a, 2b, 2c, 2d) mit dem Boden (1) jeweils einen Winkel von zwischen 50° und 85° einschliesst.

6. Behälter nach einem der Ansprüche 1 bis 5, **dadurch gekennzeichnet, dass** mindestens die Oberseite des Bodens (1) und mindestens die Innenseiten der Seitenwände (2a, 2b, 2c, 2d) von Abschnitten einer flexiblen Plane gebildet werden.

7. Behälter nach Anspruch 6, **dadurch gekennzeichnet, dass** die flexible Plane einstückig ist.

8. Behälter nach einem der Ansprüche 1 bis 7, **dadurch gekennzeichnet, dass** der Boden (1) und die Seitenwände (2a, 2b, 2c, 2d) jeweils aus einem Abschnitt einer flexiblen Plane bestehen.

9. Behälter nach Anspruch 8, **dadurch gekennzeichnet, dass** der obere Rand mindestens eines Teils der Seitenwände (2a, 2b, 2c, 2d) durch eine Randstange verstärkt ist.

10. Behälter nach Anspruch 8 oder 9, **dadurch gekennzeichnet, dass** er Stützen (6) aufweist, welche jeweils von einem Ende des oberen Randes einer der Seitenwände (2a, 2b, 2c, 2d) ausgehen und unverschiebbar am Boden (1) abgestützt sind.

11. Behälter nach einem der Ansprüche 1 bis 7, **dadurch gekennzeichnet, dass** mindestens ein Teil der Seitenwände (2a, 2b, 2c, 2d) jeweils mindestens einen an den Boden (1) anschliessenden und sich bis zum oberen Rand erstreckenden starren Seitenwandabschnitt umfasst.

12. Behälter nach Anspruch 11, **dadurch gekennzeichnet, dass** der starre Seitenwandabschnitt jeweils mit einer elastischen Kraft beaufschlagt ist, welche in einem den Winkel zwischen dem Boden (1) und dem Seitenwandabschnitt vergrössernden Sinn auf ihn einwirkt.

13. Behälter nach Anspruch 12, **dadurch gekennzeichnet, dass** dem starren Seitenwandabschnitt jeweils ein am Boden (1) abgestütztes Federelement zugeordnet ist, welches die elastische Kraft erzeugt.

14. Behälter nach Anspruch 13, **dadurch gekennzeichnet, dass** das Federelement als Torsionsfederelement ausgebildet ist.

15. Behälter nach einem der Ansprüche 1 bis 14, **dadurch gekennzeichnet, dass** der Boden (1) viereckig ist.

## Claims

1. A collapsible container with a bottom (1) in the form of a polygon, and with a trapezoid side wall (2a, 2b, 2c, 2d) on each side of the bottom (1) extending over the length thereof and flexibly connecting thereto with a lower edge, and having lateral edges which respectively depart from one bottom corner (3a, 3b, 3c, 3d), and a free upper edge, **characterised in that** the lateral edges of two adjacent side walls (2a, 2b; 2b, 2c; 2c, 2d; 2d, 2a) that join each other on a bottom corner (3a; 3b; 3c; 3d) are respectively connected by a triangular gusset (4a; 4b; 4c; 4d) that becomes broader from the bottom corner (3a; 3b; 3c; 3d) to an upper edge, the gusset in each case flexibly connecting to the two lateral edges in such a way that in a state of use of the container the upper edges of the side walls (2a, 2b, 2c, 2d) and the gusset (4a, 4b, 4c, 4d) surround an opening (5) that lies above the bottom (1).

2. The container according to claim 1, **characterised in that** each of the gussets (4a, 4b, 4c, 4d) can be respectively folded at least along a center line.

3. The container according to claim 1 or 2, **characterised in that** at least for every second of the side walls (2a, 2b, 2c, 2d) the upper edge is shorter than the lower edge, and, in the state of use, each of the side walls (2a, 2b, 2c, 2d) is orthogonal to or inwardly inclined with respect to the bottom (1).

4. The container according to claim 3, **characterised in that** for each of the side walls (2a, 2b, 2c, 2d) the upper edge is shorter than the lower edge, and, in the state of use, each of the side walls (2a, 2b, 2c, 2d) is inwardly inclined with respect to the bottom (1).

5. The container according to claim 4, **characterised in that** in the state of use each of the side walls (2a, 2b, 2c, 2d) respectively encloses an angle between 50 and 85° with the bottom (1).

6. The container according to any one of claims 1 to 5, **characterised in that** at least the upper face of the bottom (1) and at least the inner faces of the side walls (2a, 2b, 2c, 2d) are formed by portions of a flexible tarpaulin.

7. The container according to claim 6, **characterised in that** the flexible tarpaulin is a single piece.

8. The container according to any one of claims 1 to 7, **characterised in that** the bottom (1) and the side walls (2a, 2b, 2c, 2d) respectively consist of a portion of a flexible tarpaulin.

9. The container according to claim 8, **characterised in that** the upper edge of at least a part of the side walls (2a, 2b, 2c, 2d) is reinforced by an edge rod.

10. The container according to claim 8 or 9, **characterised in that** it has supports (6) that respectively depart from one end of the upper edge of one of the side walls (2a, 2b, 2c, 2d) and are supported on the bottom (1) in a non-displaceable manner.

11. The container according to any one of claims 1 to 7, **characterised in that** at least a part of the side walls (2a, 2b, 2c, 2d) respectively comprises a rigid side wall portion that connects to the bottom (1) and extends up to the upper edge.

12. The container according to claim 11, **characterised in that** the rigid side wall portion is respectively subjected to an elastic force that acts on it in a sense that enlarges the angle between the bottom (1) and the side wall portion.

13. The container according to claim 12, **characterised in that** a spring element that is supported on the bottom (1) and that generates the elastic force is respectively associated with the rigid side wall portion.

14. The container according to claim 13, **characterised in that** the spring element is configured as a torsion spring element.

15. The container according to any one of claims 1 to 14, **characterised in that** the bottom (1) is quadrangular.

## Revendications

1. Récipient repliable avec un fond (1) ayant la forme d'un polygone, et avec une paroi latérale trapézoïde (2a, 2b, 2c, 2d) s'étendant sur chaque côté du fond (1) le long de la longueur de celui-ci et se raccordant de manière flexible à celui-ci avec un bord inférieur, et ayant des parois latérales, respectivement partant d'un coin de fond (3a, 3b, 3c, 3d), et un bord supérieur libre, **caractérisé en ce que** les bords latéraux de deux parois latérales (2a, 2b ; 2b, 2c ; 2c, 2d ; 2d, 2a) adjacentes qui se rejoignent respectivement sur un coin de fond (3a ; 3b ; 3c ; 3d) sont raccordés par un gousset triangulaire (4a ; 4b ; 4c ; 4d) qui s'élargit à partir du coin de fond (3a ; 3b ; 3c ; 3d) jusqu'à un bord supérieur, le gousset étant respectivement raccordé de manière flexible aux deux bords latéraux de manière telle que, dans un état d'utilisation du récipient, les bords supérieurs des parois latérales (2a, 2b, 2c, 2d) et le gousset (4a, 4b, 4c, 4d) entourent une ouverture (5) située au-dessus du fond (1) .

2. Récipient selon la revendication 1, **caractérisé en ce que** chacun des goussets (4a, 4b, 4c, 4d) est respectivement repliable au moins le long d'une ligne centrale.

3. Récipient selon la revendication 1 ou 2, **caractérisé en ce que,** au moins sur chaque seconde paroi latérale (2a, 2b, 2c, 2d) respectivement, le bord supérieur est plus court que le bord inférieur, et **en ce que**, dans l'état d'utilisation, chacune des parois latérales (2a, 2b, 2c, 2d) est verticale ou inclinée vers l'intérieur par rapport au fond (1).

4. Récipient selon la revendication 3, **caractérisé en ce que,** sur chacune des parois latérales (2a, 2b, 2c, 2d), le bord supérieur est plus court que le bord inférieur, et **en ce que**, dans l'état d'utilisation, chacune des parois latérales (2a, 2b, 2c, 2d) est inclinée vers l'intérieur par rapport au fond (1).

5. Récipient selon la revendication 4, **caractérisé en ce que,** dans l'état d'utilisation, chacune des parois latérales (2a, 2b, 2c, 2d) respectivement forme un angle entre 50 et 85° avec le fond (1).

6. Récipient selon l'une quelconque des revendications 1 à 5, **caractérisé en ce qu'**au moins la face supérieure du fond (1) et au moins les faces intérieures des parois latérales (2a, 2b, 2c, 2d) sont formées par des portions d'une bâche flexible.

7. Récipient selon la revendication 6, **caractérisé en ce que** la bâche flexible est d'un seul tenant.

8. Récipient selon l'une quelconque des revendications 1 à 7, **caractérisé en ce que** le fond (1) et les parois latérales (2a, 2b, 2c, 2d) respectivement consistent en une portion d'une bâche flexible.

9. Récipient selon la revendication 8, **caractérisé en ce que** le bord supérieur au moins d'une partie des parois latérales (2a, 2b, 2c, 2d) est renforcé par une barre de bord.

10. Récipient selon la revendication 8 ou 9, **caractérisé en ce qu'**il présente des appuis (6) qui respectivement partent d'une extrémité du bord supérieur de l'une des parois latérales (2a, 2b, 2c, 2d) et s'appuient sur le fond (1) de manière non-déplaçable.

11. Récipient selon l'une quelconque des revendications 1 à 7, **caractérisé en ce qu'**au moins une partie des parois latérales (2a, 2b, 2c, 2d) respectivement comprend au moins une portion de paroi latérale rigide qui se raccorde au fond (1) et s'étend jusqu'au bord supérieur.

12. Récipient selon la revendication 11, **caractérisé en ce que** la portion de paroi latérale rigide est respectivement chargée avec une force élastique qui agit sur elle dans un sens qui augmente l'angle entre le fond (1) et la portion de paroi latérale rigide.

13. Récipient selon la revendication 12, **caractérisé en ce que** chaque portion de paroi latérale rigide est respectivement associée avec un élément de ressort qui fait appui sur le fond (1) et génère la force élastique.

14. Récipient selon la revendication 13, **caractérisé en ce que** l'élément de ressort est configuré sous forme d'élément de ressort à torsion.

15. Récipient selon l'une quelconque des revendications 1 à 14, **caractérisé en ce que** le fond (1) est quadrangulaire.
